**Europäisches Patentamt**

**European Patent Office**

**Office européen des brevets**

(19)

(11) Veröffentlichungsnummer : **0 351 710 B1**

(12) **EUROPÄISCHE PATENTSCHRIFT**

(45) Veröffentlichungstag der Patentschrift :
**22.01.92 Patentblatt 92/04**

(51) Int. Cl.⁵ : **B65B 19/00, G21C 19/36**

(21) Anmeldenummer : **89112780.5**

(22) Anmeldetag : **12.07.89**

(54) **Befüllvorrichtung zum geordneten, vollständigen Füllen eines Behälters mit Stäben, insbesondere von abgebrannten Brennelementen aus kerntechnischen Anlagen, in hexagonal dichtester Packung.**

(30) Priorität : **22.07.88 DE 8809387 U**

(43) Veröffentlichungstag der Anmeldung :
**24.01.90 Patentblatt 90/04**

(45) Bekanntmachung des Hinweises auf die
Patenterteilung :
**22.01.92 Patentblatt 92/04**

(84) Benannte Vertragsstaaten :
**DE ES SE**

(56) Entgegenhaltungen :
**EP-A- 0 005 623**
**EP-A- 0 128 236**
**FR-A- 2 556 489**
**US-A- 4 683 110**

(73) Patentinhaber : **SIEMENS**
**AKTIENGESELLSCHAFT**
**Wittelsbacherplatz 2**
**W-8000 München 2 (DE)**

(72) Erfinder : **Pickl, Egon, Dipl.-Ing. (FH)**
**Waldstrasse 4**
**W-8501 Grosshabersdorf (DE)**
Erfinder : **Krüger, Joachim**
**Jägerstein 20**
**W-8550 Forchheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Befüllvorrichtung zum geordneten, vollständigen Füllen eines Behälters mit Stäben in hexagonal dichtester Packung, insbesondere mit Stäben von abgebrannten Brennelementen aus kerntechnischen Anlagen.

Bevorzugt bei kerntechnischen Anlagen besteht häufig die Notwendigkeit, die einzelnen Brennstäbe von abgebrannten Brennelementen insbesondere zur Lagerung und zum Transport geordnet in Behälter einzufüllen. Hierbei ist es zum Erreichen einer hexagonal dichtesten Packung der Stäbe im Behälter erforderlich, diese beim Befüllvorgang an vorbestimmte Positionen im Behälter zu plazieren und die bereits eingefüllten Stäbe bis zum Erreichen des vollständig gefüllten Zustandes des Behälters gegen Verrutschen zu sichern. Insbesondere beim fernbedienten Manipulieren von aus abgebrannten Brennelementen entnommenen Stäben, welche relativ zum Durchmesser eine erhebliche Längenausdehnung haben können, ist es notwendig, die für den einzelnen Brennstab innerhalb der hexagonalen Packungsstruktur vorgesehene Position definiert vorzugeben. Ferner müssen die Stäbe in dieser Position bis zum Erreichen der vollständigen Füllung des Behälters arretiert werden, bei der sich aufgrund der vollständigen Ausfüllung des Behälterinneren die in hexagonal dichtester Packung liegenden Stäbe an den Behälterwänden und gegenseitig abstützen. Wird dagegen beim sukzessiven Einbringen der Stäbe in den Behälter die innerhalb der hexagonal dichtesten Packung vorbestimmte Positionen nicht exakt eingehalten, so besteht die Gefahr, daß der Behälter nicht vollständig gefüllt werden kann, da für die letzten einzufüllenden Stäbe nicht mehr ausreichend Platz zwischen den bereits eingefüllten Stäben und der Behälterinnenwandung vorhanden ist. In einem solchen Fall müßten unter Umständen alle Stäbe aus dem Behälter wieder entnommen und der Befüllvorgang erneut durchgeführt werden.

Der Erfindung liegt die Aufgabe zugrunde, eine Befüllvorrichtung anzugeben, welche ein derart geordnetes Füllen eines Behälters mit Stäben ermöglicht, daß diese das Behälterinnere vollständig in hexagonal dichtester Packung ausfüllen.

Die Aufgabe wird gelöst mit den Merkmalen von Schutzanspruch 1. Vorteilhafte Ausgestaltungen der Erfindung sind in den Unteransprüchen angegeben.

Die Erfindung wird desweiteren anhand der nachfolgend kurz angeführten Figuren näher erläutert. Dabei zeigt :

| | |
|---|---|
| FIG 1 | eine Befüllvorrichtung gemäß der Erfindung im Längsschnitt, |
| FIG 2 | eine weitere vorteilhafte Ausführungsform der Befüllvorrichtung im Längsschnitt, |
| FIG 3 | die Befüllvorrichtung bei der Befüllung mit einer ersten Reihe von Stäben im Längsschnitt, |
| FIG 4 | eine Querschnittsdarstellung durch die Befüllvorrichtung bei der Befüllung mit einer ersten Reihe von Stäben, |
| FIG 5 | die Befüllvorrichtung bei der Befüllung mit einer zweiten Reihe von Stäben im Querschnitt, |
| FIG 6 | die Befüllvorrichtung bei der Befüllung mit einer dritten Reihe von Stäben im Querschnitt, |
| FIG 7 | die Befüllvorrichtung bei vollständiger Füllung mit Stäben in hexagonal dichtester Packung, |
| FIG 8 | eine vorteilhafte Ausführungsform eines Positioniermittels der Befüllvorrichtung für eine erste Reihe von Stäben, und |
| FIG 9a, b, c | eine weitere vorteilhafte Ausführungsform des Positioniermittels und vorteilhafte Ausführungsformen von Schiebern der Befüllvorrichtung. |

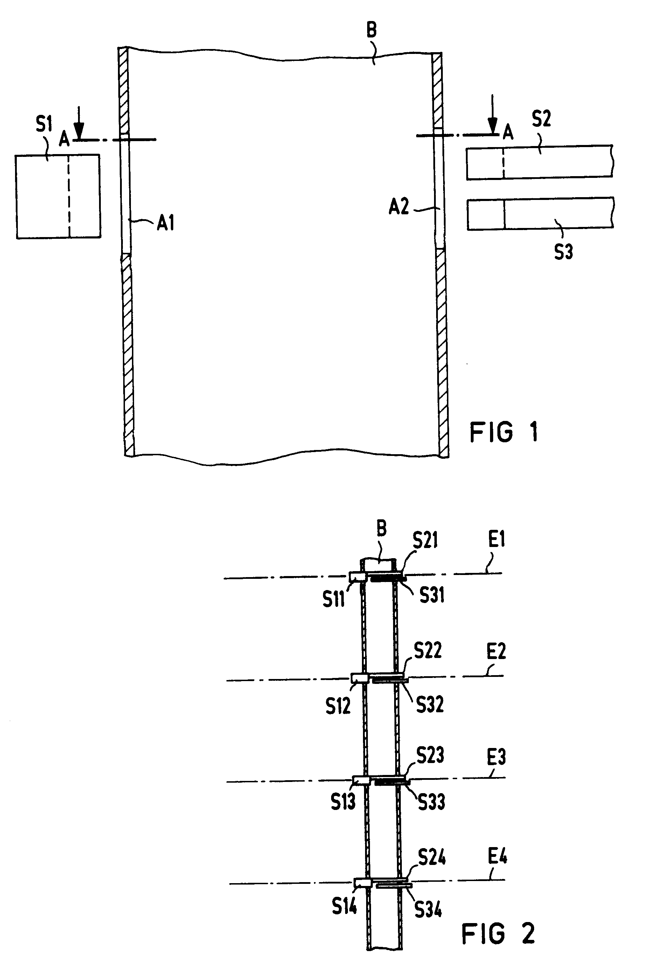

Entsprechend der Darstellung von FIG 1 besteht eine vorteilhafte Ausführungsform einer Befüllvorrichtung gemäß der Erfindung aus einem Behälter B und aus drei Schiebern S1, S2 und S3. Die Schieber können mittels gegenüberliegend in den Behälterwänden befindlichen Öffnungen A1 und A2 in das Behälterinnere eingreifen, wobei die Schieber S2 und S3 übereinanderliegend gemeinsam von der einen Seite über die Öffnung A2 über die gesamte Behälterbreite in das Innere eingreifen.

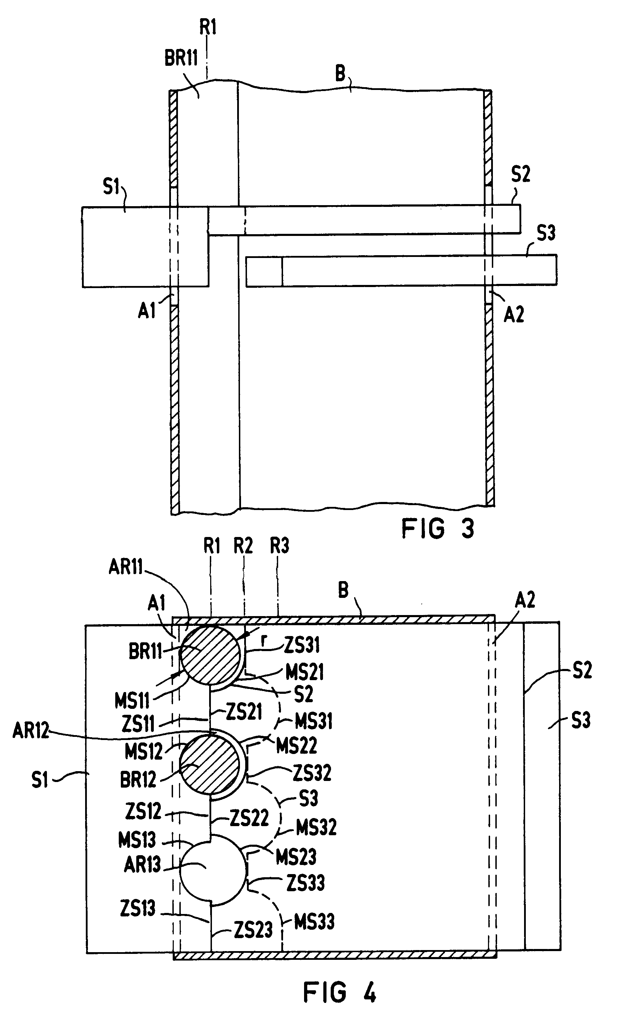

In der FIG 3 ist der Eingriff der Schieber beim Einbringen eines ersten Stabes BR11 einer ersten Stabreihe R1 in den Behälter B im Querschnitt entlang der in der FIG 1 eingetragenen Schnittlinie A-A im Detail dargestellt. Der Schieber S1 dient dabei zur Positionierung dieser ersten Stabreihe an vorbestimmten Positionen an der Innenseite der Behälterwandung, an der mit dem Befüllvorgang begonnen wird. Abhängig von den jeweiligen Behälterinnenabmessungen ist die Lage und das verrutschsichere Einhalten dieser Positionen ausschlaggebend dafür, daß der Behälter vollständig mit in hexagonal dichtester Packung geordneten Stäben gefüllt werden kann. Beim Befüllen dieser ersten Reihe R1 von Stäben befindet sich der Schieber S2 in einer sogenannten Befüllposition und der Schieber S3 zunächst in einer Warteposition. Der Aufbau der Schieber und deren Funktionsweise wird desweiteren anhand der Figuren 4 bis 7 am Beispiel eines Befüllvorganges im Detail erläutert.

FIG 4 zeigt einen Querschnitt durch die Befüllvorrichtung, wobei die einzelnen Schieber sich entsprechend der FIG 3 in den Stellungen befinden, welche zum Befüllen einer ersten Reihe R1 von Stäben in den Behälter notwendig sind. Man erkennt, daß die Schieber an den in das Behälterinnere hineinragenden Stirnseiten mit Mulden versehen sind, wodurch die Positionen der Stäbe der jeweils einzufüllenden Reihe im Behälterinneren definiert vorgegeben werden. In dem in der FIG 4 dargestellten Ausführungsbeispiel haben die Stäbe einen kreisförmigen Querschnitt. Dementsprechend sind die Mulden in den Schiebern vorteilhaft in Form von halbkreisförmigen Ausnehmungen ausgeführt. So verfügt gemäß der in der FIG 4 dargestellten Ausführungsform der Schieber S1 über die Mulden MS11, MS12 und MS13. Die zwischen den Mulden an der Stirnseite des Schiebers verbleibenden Stege werden desweiteren als Stützzähne ZS11, ZS12 und ZS13 bezeichnet. In der gleichen Weise verfügt der Schieber S2 über die Mulden MS21, MS22, MS23 mit den dazwischenliegenden Stützzähnen ZS21, ZS22, ZS23, und der Schieber S3 über die Mulden MS31, MS32, MS33 mit den dazwischenliegenden Stützzähnen ZS31, ZS32, ZS33.

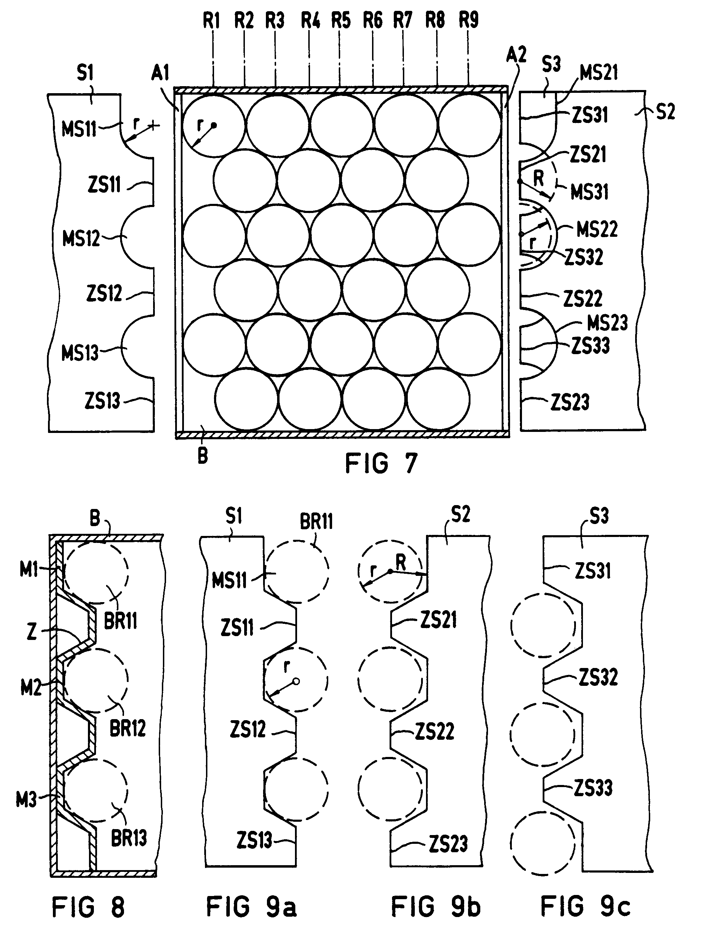

Die Mulden und Stützzähne der Schieber S1 und S2 sind dabei so angeordnet, daß die einzelnen Mulden und Stützzähne sich jeweils unmittelbar gegenüberliegen. So treffen beispielsweise in der FIG 4 der Stützzahn ZS11 bzw. die Mulde MS12 von Schieber S2 jeweils mit dem Stützzahn ZS21 bzw. der Mulde MS22 von Schieber S2 zusammen. Im Gegensatz dazu sind die Mulden und Stützzähne der Schieber S2 und S3 zueinander versetzt angeordnet. Liegen diese Schieber unmittelbar übereinander, wie dies beispielsweise in FIG 7 dargestellt ist, so decken die Stützzähne des einen Schiebers die durch die Mulden des anderen Schiebers gebildeten Öffnungen zum Einbringen von Stäben ab. So deckt gemäß der FIG 7 beispielsweise der Stützzahn ZS31 von Schieber S3 die Mulde MS21 von Schieber S2 ab, bzw. der Stützzahn ZS21 von Schieber S2 deckt die Mulde MS31 von Schieber S3 ab.

Wie bereits oben ausgeführt wurde, befindet sich in der FIG 4 zum Befüllen einer ersten Reihe R1 von Stäben der Schieber S2 in einer Befüllposition und der Schieber S3 in einer Warteposition. Die Stirnseite des Schiebers S2 liegt hierbei über die Stützzähne direkt an den entsprechenden Stützzähnen von Schieber S1 an. Durch die somit gegenüberliegenden Mulden der beiden Schieber werden Öffnungen gebildet, welche ein genau positioniertes Einbringen der Stäbe der ersten Stabreihe an vorbebestimmte Stellen in das Behälterinnere ermöglichen. So bildet die Mulde MS11 von Schieber S1 zusammen mit der Mulde MS21 von Schieber S2 eine Öffnung AR11, in welcher im Beispiel der FIG 4 bereits ein erster Stab BR11 eingeschoben ist. Dementsprechend bilden die Mulden MS13 und MS23 von Schieber S1 und S3 eine Öffnung AR13. Um das Einbringen von Stäben in die so gebildeten Öffnungen zu ermöglichen, wird der Schieber S3 soweit in die Warteposition zurückgezogen, daß dessen Stützzähne ZS31, ZS32, ZS33 die Mulden MS21, MS22, MS23 zur Bildung der Öffnungen AR11, AR12, AR13 freigeben.

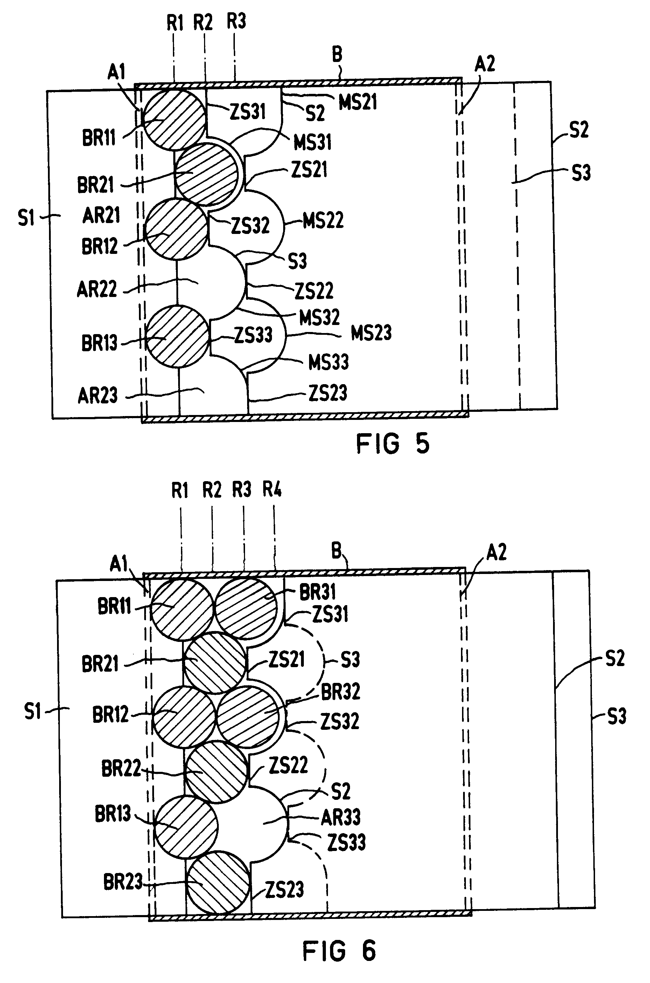

Nach dem vollständigen Einfüllen aller Stäbe BR11, BR12, BR13 der ersten Reihe R1 wird der Schieber S3 geringfügig vorgeschoben. Er befindet sich nun in der Befüllposition. Diese ist in der FIG 5 dargestellt. Hierbei liegen die Stützzähne ZS31, ZS32, ZS33 von Schieber S3 direkt an den Stäben BR11, BR12, BR13 der ersten Reihe R1 an und arretieren diese verrutschsicher in den von den Mulden des Schiebers S1 vorgegebenen Positionen. Ohne die Gefahr des Verrutschens dieser Stäbe kann der Schieber S2 nun seinerseits in die Warteposition zurückgezogen werden, bei der die Mulden MS31, MS32, MS33 von Schieber S3 freigegeben werden. In die so gebildeten Öffnungen AR21, AR22, AR23 können nun die Stäbe der zweiten Stabreihe R2 eingeschoben werden. In der Darstellung von FIG 5 ist hierbei bereits der Stab BR21 in die Öffnung AR21 eingeschoben. Aufgrund der Stabpositionsvorgabe für die erste Stabreihe durch die Mulden von Schieber S1 und der entsprechend versetzten Anordnung der Mulden an der Stirnseite der Schieber S2 und S3 ist auf diese Weise gemäß der Erfindung ein geordnetes, vollständiges Befüllen des Behälters B mit Stäben in hexagonal dichtester Packung möglich.

In der FIG 6 ist beispielhaft die zum Einfüllen einer dritten Reihe R3 von Stäben notwendige Stellung der Schieber dargestellt. Dabei befindet sich der Schieber S2 nun wieder in Befüllposition. Aufgrund direkten Anliegens der Stützzähne ZS21, ZS22, ZS23 an den zuletzt eingefüllten Stäben BR21, BR22, BR23 der zweiten Reihe R3 werden diese so gegen Verschieben gesichert, daß der Schieber S3 in die in der FIG 6 dargestellte Warteposition zurückgezogen werden kann. Hierdurch werden die Mulden MS21, MS22, MS23 freigegeben. In die so gebildeten Öffnungen können nun die Stäbe der dritten Reihe eingebracht werden, wobei gemäß der Darstellung von FIG 6 bereits die Stäbe BR31 und BR32 eingebracht sind, während die Öffnung AR33 noch nicht befüllt ist. Mit Hilfe des gerade in Befüllposition befindlichen Schiebers kann auch eine Verdichtung der bereits eingefüllten Stabreihen durch Verpressen erreicht werden.

In der FIG 7 ist schließlich eine vollständig in hexagonal dichtester Packung mit Stäben gefüllte Befüllvorrichtung gemäß der Erfindung dargestellt. Der dazugehörige Behälter B ist beispielhaft so ausgelegt, daß bei vollständiger geordneter Befüllung neun Reihen R1 bis R9 mit jeweils drei Stäben pro Reihe versetzt in hexagonal dichtester Packung aufgenommen werden können. Um beim Befüllvorgang den einzuführenden Stäben ausreichend Spiel zu geben und ein Blockieren zu vermeiden, ist es vorteilhaft, wenn die halbkreisförmigen Mulden der Schieber S2 und S3 über einen Innenradius R verfügen, der geringfügig größer ist als der Radius r eines Stabes. Beim Schieber S1 dagegen ist es vorteilhaft, den Muldenradius gleich dem Radius r der Stäbe zu wählen, da durch diese Mulden die genaue Position der ersten Reihe an Stäben und somit aller übrigen Stäbe in der hexagonalen Packungsstruktur vorgegeben wird.

In der FIG 2 ist eine weitere vorteilhafte Ausführungsform der Befüllvorrichtung gemäß der Erfindung dargestellt, welche insbesondere bei Stäben mit besonders großer Länge verwendet werden kann. Dabei ist beispielhaft in vier Ebenen E1 bis E4 jeweils ein aus drei Einzelschiebern S11, S21, S31 bis S14, S24, S34 bestehender Schiebersatz zum geordneten Befüllen des Behälters B vorgesehen. Jeder dieser Schiebersätze ist in der oben beschriebenen Weise aufgebaut. Führen dabei die einander entsprechenden Schieber S11 bis S14, S21 bis S24 und S31 bis S34 parallel gleichzeitig die gleichen Bewegungen aus, so können besonders vorteilhaft sehr lange Stäbe ohne Verbiegung geordnet in hexagonal dichtester Packung in den Behälter B eingefüllt werden.

In der FIG 8 ist ein weiteres vorteilhaftes Ausführungsbeispiel der Befüllvorrichtung dargestellt. Hierbei dient anstelle des Schiebers S1 ein mit Mulden M1, M2 und M3 versehenes Blech Z als Positioniermittel zur Vorgabe der Positionen der ersten Reihe von Stäben BR11, BR12, BR13. Diese Ausführungsform hat den besonderen Vorteil, daß kein Antrieb zur Bewegung des gewellten Bleches Z und keine Öffnung an der entsprechenden Seite in der Behälterwandung vorgesehen werden muß.

In den Figuren 9a, 9b und 9c ist schließlich eine weitere vorteilhafte Ausführungsform der Befüllvorrichtung dargestellt. Die Mulden der Schieber S1, S2 und S3 sind dabei nicht kreisförmig, sondern trapezförmig gestaltet. Auch hier ist es vorteilhaft, wenn der Innenradius R der Mulden geringfügig größer ist als der Radius r eines Stabes.

## Patentansprüche

1. Befüllvorrichtung zum geordneten, vollständigen Füllen eines Behälters mit Stäben in hexagonal dichtester Packung, insbesondere mit Stäben von abgebrannten Brennelementen aus kerntechnischen Anlagen, mit

a) einem Positioniermittel (S1 ; Z), welches das geordnete Einbringen einer ersten Reihe von Stäben (BR11, BR12, BR13) an vorbestimmte Positionen ermöglicht, und

b) einem ersten und zweiten Schieber (S2, S3), welche übereinanderliegend durch eine erste, dem Positioniermittel gegenüberliegende Öffnung (A2) an einer Seite über die gesamte Breite in das Innere des Behälters (B) eingreifen, wobei

b1) die Schieber jeweils mit Mulden (MS21, MS22, M23 bzw. MS31, MS32, MS33) und dazwischenliegenden Stützzähnen (ZS21, ZS22, ZS23 bzw. ZS31, ZS32, ZS33) versehen sind und die Mulden der Schieber so versetzt angeordnet sind, daß die Stützzähne des einen Schiebers bei Übereinanderliegen die durch die Mulden des anderen Schiebers gebildeten Öffnungen abdecken, und

b2) nach Einbringen einer Stabreihe (BR11, BR12, BR13) in die durch die Mulden (MS21, MS22, MS23) des einen Schiebers (S2) vorbestimmten Positionen die Stützzähne (ZS31, ZS32, ZS33) des anderen Schiebers (S3) die Stäbe dieser Reihe (BR11, BR12, BR13) abstützen, und durch Zurückziehen des einen Schiebers (S2) die Mulden (MS31, MS32, MS33) des anderen Schiebers (S3) freigegeben werden zum Einbringen einer weiteren Stabreihe (BR21, BR22, BR23) in die durch die so gebildeten Öffnungen (AR21, AR22, AR23) bestimmten Positionen (FIG 4 bis 7).

2. Vorrichtung nach Anspruch 1, **gekennzeichnet** durch einen weiteren Schieber (S1) als Positioniermittel zum geordneten Einbringen einer ersten Reihe von Stäben (BR11, BR12, BR13), welcher über eine weitere Öffnung (A1) über die gesamte Breite in das Innere des Behälters (B) eingreift und mit Mulden (MS11, MS12, MS13) zur Vorgabe der Stabpositionen versehen ist (FIG 4).

3. Vorrichtung nach Anspruch 1, **gekennzeichnet** durch ein gewelltes Blech (Z) als Positioniermittel zum geordneten Einbringen einer ersten Reihe von Stäben (BR11, BR12, BR13), welches mit Mulden (M1, M2, M3) zur Vorgabe der Stabpositionen in hexagonal dichtester Packung versehen ist (FIG 8).

## Claims

1. Filling device for the ordered, complete filling of a container with rods, in particular rods of spent fuel elements from nuclear facilities, in a hexagonal close-packed structure, having

a) a positioning means (S1 ; Z) which makes possible the ordered introduction of a first row of rods (BR11, BR12, BR13) at predetermined positions, and

b) a first and second slide (S2, S3) which in a superimposed fashion protrude into the interior of the container (B) over the entire width through a first aperture (A2) on one side opposite the positioning means, wherein

b1) the slides are each provided with depressions (MS21, MS22, MS23 and MS31, MS32, MS33) and support teeth (ZS21, ZS22, ZS23 and ZS31, ZS32, ZS33) lying between them, and the depressions of the slides are arranged to be offset so that when the slides are superimposed the support teeth of one slide cover the apertures formed by the depressions of the other slide, and

b2) when a row of rods (BR11, BR12, BR13) is introduced into the positions predetermined by the depressions (MS21, MS22, MS23) of one slide (S2) the support teeth (ZS31, ZS32, ZS33) of the other slide (S3) support the rods of this row (BR11, BR12, BR13) and by retracting one slide (S2) the depressions (MS31, MS32, MS33) of the other slide (S3) are released for introduction of a further row of rods (BR21, BR22, BR23) into the positions determined by the apertures (AR11, AR22, AR23) thus formed (Figs. 4 to 7).

2. Device according to claim 1, characterised by a further slide (S1) as a positioning means for the ordered introduction of a first row of rods (BR11, BR12, BR13), which protrudes into the interior of the container (B) over the entire width via a further aperture (A1) and is provided with depressions (MS11, MS12, MS13) to predetermine the rod positions (Fig. 4).

3. Device according to claim 1, characterised by a corrugated sheet (Z) as positioning means for the ordered introduction of a first row of rods (BR11, BR12, BR13) which is provided with depressions (M1, M2, M3) to predetermine the rod positions in the hexagonal close-packed structure (Fig 8).

## Revendications

1. Dispositif de chargement, pour emplir, complètement et de manière ordonnée, un récipient de crayons, suivant un agencement hexagonal très tassé, notamment de crayons d'assemblages combustibles épuisés d'installation de génie nucléaire, comprenant

a) un moyen de mise en position (S1 ; Z), qui permet l'introduction ordonnée d'une première rangée de crayons (BR11, BR12, BR13) en des positions déterminées à l'avance, et

b) un premier tiroir (S2) et un second tiroir (S3), qui, en étant superposés, pénètrent, par une première ouverture (Az) opposée au moyen de mise en position, d'un côté et sur toute la largeur, à l'intérieur du récipient (B),

b1) les tiroirs étant munis d'auges (MS21, MS22, MS23 et MS31, MS32, MS33) et de dents d'appui (ZS21, ZS22, ZS23 et ZS31, ZS32, ZS33) interposées entre elles et les auges des tiroirs étant décalées de façon que les dents d'appui de l'un des tiroirs recouvrent, lors de la superposition, les ouvertures formées par les auges de l'autre tiroir, et

b2) après qu'une rangée de crayons (BR11, BR12, BR13) a été mise en les positions déterminées à l'avance par les auges (MS21, MS22, MS23) de l'un des tiroirs (S2), les dents d'appui (ZS31, ZS32, ZS33) de l'autre tiroir (S3) soutiennent les crayons de cette rangée (BR11, BR12, BR13) et, par le retrait de l'un des tiroirs (S2), les auges (MS31, MS32, MS33) de l'autre tiroir (S3) sont dégagées pour mettre en place une autre rangée de crayons (BR21, BR22, BR23) en les positions déterminées par les ouvertures (AR21, AR22, AR23) ainsi formées (figures 4 à 7).

2. Dispositif suivant la revendication 1, caractérisé par un tiroir supplémentaire (S1) qui sert de moyen de mise en position pour l'introduction ordonnée d'une première rangée de crayons (BR11, BR12, BR13), qui pénètre, par une autre ouverture (A1), sur toute la largeur à l'intérieur du récipient (B) et qui est muni d'auges (MS11, MS12, MS13) destinées à donner à l'avance les positions des crayons (figure 4).

3. Dispositif suivant la revendication 1, caractérisé par une tôle (Z) ondulée servant de moyen de mise en position pour l'introduction ordonnée d'une première rangée de crayons (BR11, BR12, BR13), qui est munie d'auges (M1, M2, M3) destinées à donner à l'avance la position des crayons dans un agencement hexagonal très tassé (figure 8).

FIG 1

FIG 2

FIG 3

FIG 4

7

FIG 5

FIG 6

FIG 7

FIG 8

FIG 9a

FIG 9b

FIG 9c